# EUROPÄISCHE PATENTSCHRIFT

(11) **EP 0 512 403 B1**
(45) Veröffentlichungstag und Bekanntmachung des Hinweises auf die Patenterteilung: **06.03.1996**
(21) Anmeldenummer: 92107344.1
(22) Anmeldetag: 29.04.1992
(51) Int. Cl.: G01C 11/00

(54) **Anordnung zur hochgenauen videogrammetrischen Messwerterfassung**
Arrangement for high-precision acquisition of videogrammetric data
Dispositif pour l'acquisition à haute précision de données de mesure vidéogrammétriques

(30) Priorität: 10.05.1991 DE 4115793
(43) Veröffentlichungstag der Anmeldung: 11.11.1992
(73) Patentinhaber: RHEINMETALL JENOPTIC OPTICAL METROLOGY GmbH, D-07745 Jena (DE)
(72) Erfinder: Gittler, Günter, Dr., O-6908 Jena (DE); Kühnert, Jürgen, O-6902 Jena (DE); Richter, Uwe, O-6908 Jena (DE); Moore, Thomas, O-6902 Jena (DE)
(74) Vertreter: Geyer, Werner, Dr.-Ing.

(56) Entgegenhaltungen:
- EP-A- 0 366 456
- EP-A- 0 395 913
- WO-A-88/07312
- WO-A-90/05424
- DE-A- 4 031 753
- IEEE TRANSACTIONS ON CONSUMER ELECTRONICS, Bd. 34, Nr. 3, August 1988, New York, US, Seiten 497-504, ADACHI et al: "A new camera-type color image scanner with a high speed scanning mechanism"

## Beschreibung

Die Erfindung bezieht sich auf eine Anordnung zur hochgenauen videogrammetrischen Meßwerterfassung mit einem zweidimensionalen Sensorarray, das in der Bildebene eines optischen Systems senkrecht zur optischen Achse beweglich angeordnet ist, einem Mikroscanniersystem, das eine Relativbewegung einer über das optische System vermittelten Objektabbildung gegenüber der Lage des Sensorarrays mittels Translatoren realisiert, wobei elektrisch ansteuerbare Translatoren in x- und y-Richtung von einer mit der Sensorablaufsteuerung gekoppelten Scannregimesteuereinheit zur Bewegung des Sensorarrays mit geringeren Schrittweiten als durch die Abstände von Sensoren im Sensorarray gegeben angesteuert werden, mit einer Signalaufbereitungseinheit einschließlich Signaldigitalisierung, einem Bildspeicher mit Bildspeichersteuerung und mit einer Bildauswerteeinheit, wobei die drei letztgenannten Einheiten aufeinanderfolgend dem Sensorarray nachgeordnet sind.

Eine derartige Anordnung ist aus der EP 0 366 456 bekannt, bei der kommerziell verfügbare photoelektrische Arrays für eine hochaufgelöste Bildaufnahme eingesetzt werden. Die Arrays werden zur Bildaufnahme relativ zum Bild verschoben. Die Schrittweite ist dabei geringer als die Abstände der Sensoren in dem Array. Dadurch erhält man aufgrund der elektrischen Signale eine bessere Auflösung als sie durch das Raster des Arrays gegeben wird.

In der WO-A-90/05424 wird ein optoelektronischer Farbbildwandler beschrieben, bei dem eine CCD-Matrix relativ zum aufzunehmenden Bild verschiebbar angeordnet ist. Zur Bildaufnahme wird das CCD-Array sequentiell jeweils soweit verschoben, daß nacheinander die für die verschiedenen Farben empfindlichen Sensorelemente des CCD-Arrays jeweils an denselben Bildort zu liegen kommen. Eine Speicher- und Steuereinheit setzt die mit den verschobenen CCD-Arrays aufgenommenen Farbauszüge der Teilbilder anschließend deckungsgleich zusammen. Die Genauigkeit der Bilderfassung ist damit wesentlich vom Raster der CCD-Matrix bestimmt. Mit diesem bekannten Verfahren lassen sich deswegen keine kleineren Abstände als die vermessen, die durch die Abstände der lichtempfindlichen Elemente in einer CCD-Matrix gegeben sind. Zudem kann auch ein Positionierfehler durch unterschiedliche Lichtempfindlichkeiten benachbarter Sensorelemente zu einer Positionierungenauigkeit führen.

Die beiden genannten Anordnungen sind daher für hochpräzise videogrammetrische Anwendungen in der industriellen Meßtechnik bzw. zur Qualitätkontrolle und in optischen Präzisionsgeräten ungeeignet.

Die Genauigkeit messender Bildverarbeitungssysteme wird durch die Optik, die geometrischen Abmessungen der Bildsensorelemente und die Anzahl der Stützstellen zur Bildverarbeitung, die der Anzahl der Bildrasterpunkte äquivalent ist, bestimmt. Werden die Grenzen der Meßgenauigkeit erreicht, ist es üblich, durch definierten Versatz des Objektes bezüglich des Aufnahmesystems und anschließender erneuter Erfassung des Objektes die Meßgenauigkeit des Bildaufnahmesystems zu erhöhen. Für anspruchsvolle meßtechnische Anwendungen unter industriellen Bedingungen ist ein solches Vorgehen jedoch nicht einsetzbar.

Aus der Verwendung von CCD-Kameras für die Bildaufnahme zur Einspeisung in Fernsehsysteme wurde eine Form zur Verdopplung der Zeilenanzahl der Bildaufnahmeeinheit bekannt, die in der EP-B-065 855 beschrieben ist. Hier wird für photosensible Matrizen, bei denen technologisch bedingt neben den photoempfindlichen Zeilen Zwischenzeilen zum Ladungstransport angeordnet sind, durch Verschiebung der Matrix um annähernd den halben Abstand der photoempfindlichen Elemente die bildliche Auflösung in Verschieberichtung verdoppelt. Weiterhin ist es in Anlehnung an dieses Prinzip für CCD-Matrizen nach dem Interline-Transfer-Prinzip (IT-CCD) bekannt, daß die Aufnahme zweier Teilbilder im zeitlichen Wechsel durch einen schwingenden CCD-Träger realisiert werden kann, indem jeweils im Umkehrpunkt der Schwingung der Einzug eines Teilbildes erfolgt, um die Anpassung des CCD-Bildaufnehmers an eine Fernsehnorm zu erreichen. Damit ist zwar durch die Aufnahme zweier Halbbilder, die durch die Verschiebung des Matrixträgers erzeugt werden, eine exakte Verdopplung der Bildpunktzahl in senkrechter Richtung zur Zeilenrichtung stets gewährleistet, jedoch sind Unregelmäßigkeiten im Verschiebungsablauf der Matrix sowie generelle Fehlpositionierungen nicht wahrnehmbar und tragen deshalb regelmäßig zur Genauigkeitsminderung bei, obwohl eine Pseudo-Auflösungserhöhung infolge der verdoppelten Anzahl der Bildpunkte vorliegt.

Der Erfindung liegt die Aufgabe zugrunde, eine Möglichkeit zur hochgenauen videogrammetrischen Meßwerterfassung zu finden, die einen zuverlässig genauen Bildeinzug für Meßaufgaben mit hohen geometrischen Anforderungen erlaubt.

Ausgehend von der eingangs genannten Anordnung wird diese Aufgabe dadurch gelöst, daß
- das Sensorarray mit seinen geometrischen Abmessungen der Sensorelemente und Sensorelementpositionen eine exakte Maßverkörperung für die Meßaufgabe darstellt, wobei der Abbildungsmaßstab des optischen Systems im Auswerteprozeß der Bildauswerteeinheit berücksichtigt ist,
- die Scanregimesteuereinheit Positions-Sollwerte enthält, die aus der konkreten Geometrie und Betriebsart des Sensorarrays abgebildet und gegenüber der Ursprungslage der Maßverkörperung um definiert ausgewählte Bruchteile des konkreten Mittenabstands der Sensorelemente verschoben sind, und
- das Mikroscanniersystem weiterhin ein x-y-Meßsystem mit nachgeschalteter Positionsaufbereitungseinheit zur Positions-lstwert-Erfassung des Sensorarrays enthält, dessen Ausgang mit der Bildauswerteeinheit zur Zuordnung der Speicheradressen des Bildspeichers zu den Positions-lstwerten verbunden ist.

Gegenüber dem eingangs genannten Stand der Technik stellt das zweidimensionale Sensorarray eine exakte Maßverkörperung für die Meßaufgabe dar. Zudem ist ein x-y-Meßsystem zur Positions-lstwert-Erfassung des Sensorarrays vorgesehen, wodurch eine bessere Vermessung als beim Stand der Technik erfolgen kann.

Dabei besteht die Möglichkeit, die Kopplung zwischen Sensor-Ablaufsteuerung und Scanregimesteuereinheit zur Synchronisation derart zu organisieren, daß die Scanregimesteuereinheit priorisiert ist und das Zeitraster für den Meßwerteinzug durch die Sensor-Ablaufsteuerung vorgibt. Eine dazu gleichwertige Variante dieser Kopplung ist die Synchronisation mit Priorisierung der Sensor-Ablaufsteuerung, wobei sich die Übertragung des Zeittaktes der Sensor-Ablaufsteuerung so auswirkt, daß die Sensor-Positionierung durch die Scanregimesteuereinheit im Sensor-Betriebsregime erfolgt und demzufolge eine Anbindung an übliche Videotechnik möglich ist. Die elektrisch ansteuerbaren Translatoren des Mikroscanniersystems sind zweckmäßig elektro- oder magnetostriktive Stellglieder oder sind in der Art von Tauchspulinstrumenten ausgeführt.

Das zum Mikroscanniersystem gehörige x-y-Meßsystem weist vorteilhaft je Koordinatenrichtung einen Wegsensor und eine Wegsignalaufbereitung auf, wobei die Positions-Istwerte auf die vorgesehenen Eingänge der Positionsaufbereitungseinheit geleitet werden.

Als Wegsensoren werden vorteilhaft kapazitive Differentialsensoren eingesetzt. Es sind jedoch beliebige Wegaufnehmer denkbar bis hin zur Kombination von Lichtquelle und positionsempfindlicher Photodiode, z. B. Quadrantenphotodiode. Um die Aufnahme von Stützstellen hinreichend reproduzierbar zu gestalten, ist es von Vorteil, wenn das x-y-Meßsystem über einen (analogen) Regelkreis auf die Translatoren rückgekoppelt wird, wobei der jeweilige Wegregler, vorzugsweise in Form eines PID-Reglers, mit der Scanregimesteuereinheit in Verbindung steht.

Zur Kompensation von Temperaturschwankungen am Sensorarray wird zweckmäßig ein zusätzlicher Temperatursensor angebracht, dessen Ausgang vorzugsweise mit der Positionsaufbereitungseinheit in Verbindung steht, so daß außer der Korrektur in der Bildauswerteeinheit auch eine Anpassung in der Scanregimesteuereinheit möglich ist.

Durch den Einsatz eines dem Sensorarray unmittelbar vorgeordneten und mit diesem fest verbundenen zweidimensionalen Arrays quadratischer Einzelblenden läßt sich die Apertur der Sensorelemente des Sensorarrays zur Aufprägung einer definierten metrischen Maßverkörperung gezielt einschränken. Somit ist es auch möglich, nichtmetrische CCD-Frame-Transfer- oder CID-Matrizen zur erfindungsgemäßen videogrammetrischen Meßwerterfassung einzusetzen.

Die Erfindung basiert auf der Überlegung, daß für eine hochgenaue videogrammetrische Meßwertaufnahme eine exakte Maßanbindung an das Maßverkörpernde Sensorarray anhand der konkreten Sensorgeometrie und -betriebsart erforderlich ist, um eine erhöhte Stützstellenanzahl zur Bildauswertung zur Verfügung zu haben, für deren Lichtmengenäquivalente eine exakte Positionszuordnung existiert. Dazu werden von der Maßverkörperung Abtastpositionen des Sensorarrays abgeleitet, die gegenüber der Ursprungslage des Sensorarrays um frei wählbare, definierte Bruchteile des Mittenabstandes der Sensorelemente verschoben sind. Zum hochgenauen Anfahren der Positionen ist in das Mikroscanniersystem ein x-y-Meßsystem integriert, das nicht notwendig geregelt sein muß. Es muß jedoch zwingend eine exakte Zuordnung von Positions-Istwerten zu den vom Sensorarray eingezogenen Meßwerten als gewünschte Stützstellen der hochgenauen geometrischen Bildauswertung gewährleistet sein.

Mit der erfindungsgemäßen Anordnung ist es möglich, mit Hilfe von herkömmlichen Sensorarrays eine zuverlässige, exakte videogrammetrische Meßwerterfassung zu realisieren, die höchsten Ansprüchen an die geometrische Maßhaltigkeit genügt.

Die Erfindung soll nachstehend anhand eines Ausführungsbeispieles näher erläutert werden. Die Zeichnungen zeigen:
- Fig. 1: eine schematische Darstellung der erfindungsgemäßen Anordnung
- Fig.2: eine vorteilhafte Ausgestaltung der Erfindung bei Verwendung einer CCD-Matrix nach dem Interline-Transfer-Prinzip

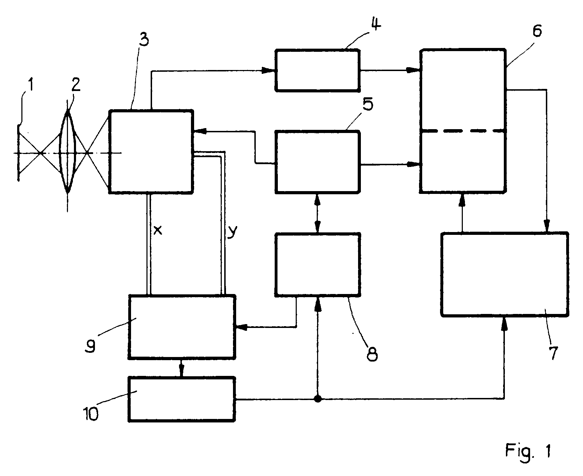

Die erfindungsgemäße Anordnung besteht in ihrem Grundaufbau - wie in Fig. 1 dargestellt - aus einem die optische Abbildung eines Objektes 1 in die Sensorbildebene vermittelnden optischen Systems 2, einem Sensorarray, einer Signalaufbereitung 4, einer Sensor-Ablaufsteuerung 5, einem Bildspeicher 6 und einer Bildauswerteeinheit, 7, die einen an sich bekannten Bilaufnahmetrakt eines Sensorarrays darstellen. Darüber hinaus enthält die erfindungsgemäße Anordnung eine Scanregimesteuereinheit 8, ein kontrollfähiges Mikroscanniersystem 9 und eine Positionsaufbereitungseinheit 10. Das optische System 2, das entsprechend der zu erzielenden geometrischen Meßgenauigkeit gute optische Eigenschaften (Verzeichnungs- und Vignettierungsfreiheit, hohe Auflösung) aufweist, bildet das zu vermessende Objekt 1 in die Bildebene des Sensorarrays ab. Der Abbildungsmaßstab ist entweder a priori bekannt und konstant oder kann jederzeit durch Messung genau bestimmt und in der Arbeit der Anordnung verwendet werden. Bei dem Sensorarray handelt es sich vorzugsweise um eine monochrome, Fernsehnnorm-kompatible CDD-Matrix 3 nach dem Interline-Transfer-Prinzip. Es können aber auch beliebige nichtmetrische Sensorarrays zum Einsatz kommen, wenn die Maßverkörperung in Form eines Blendenarrays direkt auf das Sensorarray aufgeprägt und die Fläche der einzelnen Sensorelemente definiert partiell eingeschränkt wird. Die CDD-Matrix 3 ist auf einem x-y-Mikroscanniersystem 9 so angeordnet, daß sie durch die voneinander unabhängigen Translatoren 91 und 92 in x- und y-Richtung gefahren werden kann. Dabei läßt sich der maximale Positionierbereich zweckmäßig auf den Abstand zwischen den Mittenpunkten zwischen zwei benachbarten Sensorelementen der CDD-Matrix 3 festlegen, d. h. es ist hinreichend, daß jedes Sensorelement im Extremfall auf den in der Ursprungslage der CDD-Matrix 3 eingenommenen Ort seines Nachbarelementes positioniert werden kann.

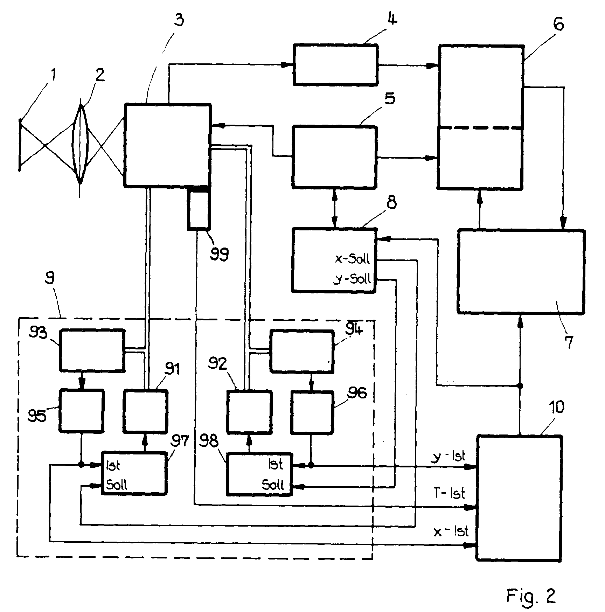

Das Mikroscanniersystem 9 besteht in jeder Achse (x,y) aus mindestens einem Translator 91 bzw. 92, vorteilhaft in Form eines Piezoverstellers, einem Wegsensor 93 bzw. 94, beispielsweise in Form eines kapazitiven Differentialsensors, und einer Wegsignalaufbereitung 95 bzw. 96. Das Mikroscanniersystem 9 kann zweckmäßig einen geschlossenen Regelkreis beinhalten, der in Fig. 2 durch den Wegregler 97, 98 hergestellt ist. Der Wegregler 97, 98 hat vorzugsweise die Form eines analogen PID-Reglers. Dadurch gestaltet sich der Einsatz des Mikroscanniersystems 9 sehr robust gegenüber den Eigenschaften der Translatoren 91, 92 (Hysterese, starker Temperaturgang) und Veränderungen der Einsatzbedingungen des Systems (z.B. Lageveränderung durch Verdrehen der gesamten Anordnung aus der Horizontalen in die Vertikale). Prinzipiell ist jedoch eine Regelung der Positionierung durch die Translatoren 91, 92 nicht notwentig erforderlich, denn der eigentliche Zuwachs an geometrischer Meßgenauigkeit und Zuverlassigkeit der zur Bildauswertung verwendeten Stützstellen wird durch die exakte Maßanbindung entsprechend der maßverkörpernden CCD-Matrix 3 erreicht. Der Regelkreis sichert zusätzlich eine höchstmögliche metrische Homogenität und Reproduzierbarkeit der Stützstellenaufnahme.

Die CCD-Ablaufsteuerung 5 liefert in herkömmlicher Weise alle zum Betreiben der CCD-Matrix 3 erforderlichen Takte, die des weiteren auch zur Steuerung der Signalaufbereitungseinheit 4 (Abtastung, Klemmung) und der Speichersteuerung (Bildanfang, Zeilenanfang, CDD-Takt) verwendet werden. Das Videosignal gelangt in die Signalaufbereitungseinheit 4, wird dort als Analogsignal verstärkt, geklemmt und anschließend synchron zum CCD-Takt in eine zeitliche Folge digitaler Signale umgesetzt. Die Werte dieser Signalfolge entsprechen den Amplituden der von den einzelnen CDD-Sensorelementen gelieferten Signale und damit den bei einer CDD-Auslesung ermittelten Stützstellen für die videogrammetrische Bildauswertung. Von der im Bildspeicher 6 enthaltenen intelligenten Speichersteuerung wird sowohl das geordnete Einschreiben in den Bildspeicher 6, als auch das nach dem Einzug einer durch das Scanregime vorgegebenen Anzahl von digitalen Signalfolgen erforderliche vernetzte Auslesen organisiert.

Die Scanregimesteuereinheit 8 gibt die zur Positionierung der CCD-Matrix 3 erforderlichen x- und y-Werte als Sollwerte für die beiden Translatoren 91, 92 vor. Das Ablaufregime zur Positionierung der CDD-Matrix 3 und zum Einzug einer Signalfolge ist mit dem CDD-Takt synchronisiert. Dabei gibt es zwei prinzipielle gleichwertige Möglichkeiten. Entweder die CCD-Ablaufsteuerung 5 ist priorisiert und gibt das Zeitraster für die Scanregimesteuereinheit 8 vor (in diesem Fall läuft die CCD-Matrix 3 vorteilhafterweise in einem Videonorm-Regime, womit der Anschluß üblicher Videotechnik z. B. zur leichteren Fokussierung möglich ist), oder die Scanregimesteuereinheit 8 ist priorisiert und gibt das Zeitraster für die CCD-Ablaufsteuerung 5 vor (in diesem Fall kann eine zeitliche Optimierung der gesamten Bildaufnahme so vorgenommen werden, daß jeweils nach der minimal erforderlichen Zeit zum Neupositionieren der CCD-Matrix 3 sofort die nächste Matrixauslesung erfolgt).

Als Scanmuster bei der x-y-Mikroscannierung der CDD-Matrix 3 soll hier wegen der zeitgünstigen Positionierfolge (ohne Beschränkung der Allgemeinheit) eine mäanderformige Bewegung angenommen werden.

Beide Wegregler 97 und 98 liefern bei der in Fig. 2 dargestellten geregelten Positions-Istwert-Erfassung die zu den von der Scanregimesteuereinheit 8 vorgegebenen Positions-Sollwerten gemessenen tatsächlichen Positions-Istwerte, die in der Positionsaufbereitungseinheit 10 getrennt nach den Koordinaten x, y und möglicherweise zusammen mit Signalen eines direkt an der CCD-Matrix 3 angebrachten Temperatursensor 99 digitalisiert und anschließend sowohl der Scanregimesteuereinheit 8 (zur Temperaturkompensation durch Änderung der x y-Sollwerte) als auch der Bildauswerteeinheit 7 zugeführt werden. Damit ist die Scanregimesteuereinheit 8 in der Lage, den vorgegebenen Sollwert mit dem tatsächlich erreichten Istwert der beiden Achsen zu vergleichen und Fehler auszugleichen, die vom Wegregler 97 bzw. 98 nicht beseitigt werden können. Die Bildauswerteeinheit 7 ist darüberhinaus erst unter Kenntnis der gemessenen x- und y-Positionswerte in der Lage, jeden aufgenommenen, digitalisierten und im Bildspeicher 6 abgelegten Bildpunkt eine eindeutige Position in Bezug auf das durch das optische System 2 abgebildete Objekt 1 zuzuordnen. Zusammen mit dem bekannten oder meßbaren Abbildungsmaßstab kann dann die Anbindung an ein äußeres Koordinatensystem erfolgen, um damit eine Grundvoraussetzung zum Einsatz der vorgestellten Anordnung in der Videogrammetrie für anspruchsvolle Meßzwecke zu erfüllen.

Um die erfindungsgemäße Anordnung z. B. auch bei Verwendung von CCD-Frame-Transfert-Matrizen einsetzen zu können, wird der CCD-Matrix 3 ein Blendenarray vorgelagert, mit dem die empfindliche Fläche der einzelnen Sensorelemente definiert eingeschränkt wird.

## Patentansprüche

1. Anordnung zur hochgenauen videogrammetrischen Meßwerterfassung mit einem zweidimensionalen Sensorarray, das in der Bildebene eines optischen Systems (2) senkrecht zur optischen Achse beweglich angeordnet ist, einem Mikroscanniersystem (9), das eine Relativbewegung einer über das optische System (2) vermittelten Objektabbildung gegenüber der Lage des Sensorarrys mittels elektrisch ansteuerbarer Translatoren (91; 92) realisiert, wobei die Translatoren (91;92) in x- und y-Richtung von einer mit der Sensorablaufsteuerung gekoppelten Scanregimesteuereinheit (8) zur Bewegung des Sensorarrays mit geringeren Schrittweiten als durch die Abstände von Sensoren im Sensorarray gegeben angesteuert werden, einer Signalaufbereitungseinheit (4) einschließlich Signaldigitalisierung, einem Bildspeicher (6) mit Bildspeichersteuerung und einer Bildauswerteeinheit (7), wobei die drei letztgenannten Einheiten aufeinanderfolgend dem Sensorarray nachgeordnet sind,
**dadurch gekennzeichnet, daß**
- das Sensorarray mit seinen geometrischen Abmessungen der Sensorelemente und Sensorelementpositionen eine exakte Maßverkörperung für die Meßaufgabe darstellt, wobei der Abbildungsmaßstab des optischen Systems (2) im Auswerteprozeß der Bildauswerteeinheit (7) berücksichtigt ist,
- die Scanregimesteuereinheit (8) Positions-Sollwerte enthält, die aus der konkreten Geometrie und Betriebsart des Sensorarrays abgebildet und gegenüber der Ursprungslage der Maßverkörperung um definiert ausgewählte Bruchteile des konkreten Mittenabstandes der Sensorelemente verschoben sind, und
- das Mikroscanniersystem (9) weiterhin ein x-y-Meßsystem mit nachgeschalteter Positionsaufbereitungseinheit (10) zur Positions-lstwert-Erfassung des Sensorarrays enthält, dessen Ausgang mit der Bildauswerteeinheit (7) zur Zuordnung der Speicheradressen des Bildspeichers (6) zu den Positions-Istwerten verbunden ist.

2. Anordnung nach Anspruch 1, dadurch gekennzeichnet,
daß die Kopplung zwischen Sensor-Ablaufsteuerung und Scanregimesteuereinheit (8) zur Synchronisation derart organisiert ist, daß die Scanregimesteuereinheit (8) die Priorität besitzt und deren Zeitraster die Vorgabe für den Meßwerteinzug durch die Sensor-Ablaufsteuerung ist.

3. Anordnung nach Anspruch 1, dadurch gekennzeichnet,
daß die Kopplung zwischen Sensor-Ablaufsteuerung und Scanregimesteuereinheit (8) zur Synchronisation derart organisiert ist, daß die Sensor-Ablaufsteuerung die Priorität besitzt und deren Zeittakt die Vorgabe für die Sensor-Positionierung durch die Scanregimesteuereinheit (8) ist.

4. Anordnung nach einem der Ansprüche 1 bis 3, dadurch gekennzeichnet,
daß die Translatoren (91,92) elektrostriktive Stellglieder sind.

5. Anordnung nach einem der Ansprüche 1 bis 3, dadurch gekennzeichnet,
daß die Translatoren (91,92) in der Art von Tauchspulinstrumenten ausgeführt sind.

6. Anordnung nach einem der Ansprüche 1 bis 5, dadurch gekennzeichnet,
daß das x-y-Meßsystem pro Koordinatenrichtung jeweils aus einem Wegsensor (93,94) und einer Wegsignalaufbereitung (95,96) besteht, wobei die Positions-Istwerte auf die vorgesehenen Eingänge der Positionsaufbereitungseinheit (10) gelegt sind.

7. Anordnung nach Anspruch 6, dadurch gekennzeichnet,
daß die Wegsensoren (93,94) kapazitive Differentialsensoren sind.

8. Anordnung nach Anspruch 6, dadurch gekennzeichnet,
daß die Wegsensoren (93,94) als Kombination aus Lichtquelle und positionsempfindlicher Photodiode ausgeführt sind.

9. Anordnung nach einem der Ansprüche 1 bis 8, dadurch gekennzeichnet,
daß das x-y-Meßsystem zur Positionierungskontrolle mittels eines analogen Regelkreises auf die Translatoren (91,92) rückgekoppelt ist, wobei der jeweilige Wegregler (97,98) zur Sollwert-Aufnahme mit der Scanregimesteuereinheit (8) in Verbindung steht.

10. Anordnung nach Anspruch 9, dadurch gekennzeichnet,
daß die Wegregler (97,98) PID-Regler sind.

11. Anordnung nach einem der Ansprüche 1 bis 10, dadurch gekennzeichnet,
daß am Sensorarray ein zusätzlicher Temperatursensor angebracht ist, dessen Ausgang vorzugsweise mit der Positionsaufbereitungseinheit (10) in Verbindung steht, so daß bei Temperaturdrift außer der Korrektur in der Bildauswerteeinheit (7) auch eine Anpassung in der Scanregimesteuereinheit (8) möglich ist.

12. Anordnung nach einem der Ansprüche 1 bis 11, dadurch gekennzeichnet,
daß die Maßverkörperung des Sensorarrays durch ein dem Sensorarray unmittelbar vorgeordnetes zweidimensionales Blendenarray zur definierten partiellen Einschränkung der Apertur der ein zelnen Sensorelemente des Sensorarrays realisiert ist.

13. Anordnung nach Anspruch 12, dadurch gekennzeichnet,
daß das Sensorarray eine CCD-Matrix nach dem Frame-Transfer-Prinzip ist.

## Claims

1. An arrangement for high-accuracy video measurement acquisition, comprising a two-dimensional sensor array disposed in the image plane of an optical system (2) so as to be movable at right angles to the optical axis, a microscanning system (9) using electrically actuatable translators (91; 92) to bring about movement relative to the position of the sensor array of an object image acquired via the optical system (2), the translators (91; 92) being actuated in the x and y direction by a scanning control unit (8) coupled to the sensor process control for moving the sensor array in smaller steps than provided by the distances between sensors in the sensor array, a signal processing unit (4) including signal digitisation, and an image store (6) with image storage control and an image evaluating unit (7), the three last-mentioned units being disposed in succession behind the sensor array, characterised in that
- the sensor array and the geometrical dimensions and positions of the sensor elements therein constitute an exact embodied scale for the measurements, the imaging scale of the optical system (2) being taken into account in the evaluation process by the image evaluating unit (7),
- the scanning control unit (8) contains set positions which are imaged from the specific geometry and mode of operation of the sensor array and are shifted relative to the original position of the embodied scale by selected defined fractions of the specific centre-to-centre distance between the sensor elements, and
- the microscanning system (9) also comprises an x-y measuring system followed by a position preparation unit (10) for acquiring the actual position of the sensor array, the output of which is connected to the image evaluating unit (7) for assigning the storage addresses in the image memory (6) to the actual positions.

2. An arrangement according to claim 1, characterised in that the coupling between the sensor process control and the scanning control unit (8) is so organised for the purpose of synchronisation that the scanning control unit (8) has priority and its time pattern presets the measurement acquisition process by the sensor process control.

3. An arrangement according to claim 1, characterised in that the coupling between the sensor process control and the scanning control unit (8) is so organised for the purpose of synchronisation that the sensor process control has priority and its time cycle presets the sensor positioning process by the scanning control unit (8).

4. An arrangement according to any of claims 1 to 3, characterised in that the translators (91, 92) are electrostrictive actuators.

5. An arrangement according to any of claims 1 to 3, characterised in that the translators (91, 92) are constructed after the style of moving-coil instruments.

6. An arrangement according to any of claims 1 to 5, characterised in that the x-y measuring system for each co-ordinate direction comprises a travel sensor (93, 94) and a travel signal processor (95, 96), the actual positions being disposed on the inputs provided in the position processing unit (10).

7. An arrangement according to claim 6, characterised in that the travel sensors (93, 94) are capacitive differential sensors.

8. An arrangement according to claim 6, characterised in that the travel sensors (93, 94) are combinations of a light source and a position-sensitive photodiode.

9. An arrangement according to any of claims 1 to 8, characterised in that for the purpose of positioning control, the x-y measuring system has feeback via an analog closed-loop control circuit to the translators (91, 92), and each travel controller (97, 98) is connected to the scanning control unit (8) for the purpose of recording set values.

10. An arrangement according to claim 9, characterised in that the travel controllers (97, 98) are PID controllers.

11. An arrangement according to any of claims 1 to 10, characterised in that an additional temperature sensor is attached to the sensor array and its output is preferably connected to the position processing unit (10), so that, in the event of a temperature drift, matching in the scanning control unit (8) is possible in addition to correction in the image evaluating unit (7).

12. An arrangement according to any of claims 1 to 11, characterised in that the scale embodied by the sensor array is in the form of a two-dimensional diaphragm array disposed immediately in front of the sensor array, for defined partial limitation of the aperture of the individual elements of the sensor array.

13. An arrangement according to claim 12, characterised in that the sensor array is a CCD matrix on the frame-transfer principle.

## Revendications

1. Dispositif pour le relevé de haute précision de valeurs de mesure vidéogrammétriques avec un ensemble de capteurs bidimensionnels, qui est placé mobile dans le plan de l'image d'un système optique (2) perpendiculairement à l'axe optique, avec un système de perpendiculairement à l'axe optique, avec un système de microbalayage (9), qui réalise un déplacement relatif d'une représentation d'un objet obtenu par le système optique (2) par rapport à la situation de l'ensemble de capteurs au moyen de translateurs (91 ; 92) commandables électriquement, dans lequel les translateurs (91 ; 92) sont commandés dans la direction X et dans la direction Y par une unité de commande de régime de balayage accouplée avec la commande séquentielle de capteur, en vue du déplacement de l'ensemble de capteurs avec des pas inférieurs à ceux donnés par les distances des capteurs dans l'ensemble de capteurs, avec une unité de préparation de signaux (4) et numérisation des signaux, avec une mémoire d'image (6) avec commande de mémoire d'image et une unité d'interprétation d'image (7), les trois dernières unités citées étant placées l'une derrière l'autre en aval de l'ensemble de capteurs,
caractérisé en ce que
- l'ensemble de capteurs constitue avec les dimensions géométriques de ses éléments de capteur et positions d'éléments de capteur, une mesure matérialisée pour la tâche de mesure, l'échelle de représentation du système optique (2) étant prise en compte dans le processus d'interprétation de l'unité d'interprétation d'image (7),
- l'unité de commande de régime de balayage (8) contient des valeurs de consigne de position, qui sont représentées à partir de la géométrie concrète et du mode de fonctionnement de l'ensemble de capteurs et sont déplacées par rapport à la position initiale de la mesure matérialisée, de fractions, sélectionnées de manière définie, de la distance concrète entre les centres des éléments des capteurs et
- le système de microbalayage (9) contient en outre un système de mesure X-Y avec unité de préparation de position (10) située en aval en vue de la détection de la valeur réelle de la position de l'ensemble de capteurs, dont la sortie est reliée à l'unité d'interprétation d'image (7) en vue de l'affectation des adresses de mémoire de la mémoire d'images (6) aux valeurs réelles de position.

2. Dispositif selon la revendication 1, caractérisé en ce que le couplage entre la commande séquentielle de capteur et l'unité de commande de régime de balayage (8) en vue de la synchronisation, est organisé de manière que la commande séquentielle de capteur possède la priorité et son rythme est imposé pour la prise. des valeurs de mesure par la commande séquentielle de capteur.

3. Dispositif selon la revendication 1, caractérisé en ce que le couplage entre la commande séquentielle de capteur et l'unité de commande de régime de balayage (8) en vue de la synchronisation est organisé de manière que la commande séquentielle de capteur possède la priorité et son ryhtme est imposé pour le positionnement de capteur par l'unité de commande de régime de balayage (8).

4. Dispositif selon l'une des revendications 1 à 3, caractérisé en ce que les translateurs (91, 92) sont des organes de positionnement à électrostriction.

5. Dispositif selon l'une des revendications 1 à 3, caractérisé en ce que les translateurs (91, 92) sont réalisés à la manière d'instruments à bobine mobile.

6. Dispositif selon l'une des revendications 1 à 5, caractérisé en ce que le système de mesure X-Y par direction de coordonnées est constitué dans chaque cas d'un capteur de distance (93, 94) et d'une préparation de signaux de distance (95, 96), les valeurs réelles de position s'appliquant aux entrées prévues de l'unité de préparation de position (10).

7. Dispositif selon la revendication 6, caractérisé en ce que les capteurs de distance (93, 94) sont des capteurs différentiels capacitifs.

8. Dispositif selon la revendication 6, caractérisé en ce que les capteurs de distance (93, 94) sont réalisés en tant que combinaisons d'une source lumineuse et d'une photodiode sensible à la position.

9. Dispositif selon l'une des revendications 1 à 8, caractérisé en ce que le système de mesure X-Y réagit sur les translateurs, en vue du contrôle de positionnement, au moyen d'un circuit de régulation analogique, le régulateur de distance (97, 98) respectif étant en relation, pour le relevé de la valeur de consigne, avec l'unité de commande de régime de balayage (8).

10. Dispositif selon la revendication 9, caractérisé en ce que les régulateurs de distance (97, 98) sont des régulateurs PID.

11. Dispositif selon l'une des revendications 1 à 10, caractérisé en ce que sur l'ensemble de capteurs est placé un capteur de température supplémentaire, dont la sortie est de préférence en liaison avec l'unité de préparation de position (10), de sorte qu'en cas de dérive de la température, en dehors de la correction dans l'unité d'interprétation d'image (7), une adaptation est possible aussi dans l'unité de commande de régime de balayage (8).

12. Dispositif selon l'une des revendications 1 à 11, caractérisé en ce que la mesure matérialisée de l'ensemble de capteurs est réalisée par un ensemble de diaphragmes bidimensionnels, situés directement en amont de l'ensemble de capteurs, en vue de la limitation partielle définie de l'ouverture des différents éléments de capteur de l'ensemble de capteurs.

13. Dispositif selon la revendication 12, caractérisé en ce que l'ensemble de capteurs est une matrice CCD selon le principe Frame-Transfer.
